(19) Europäisches Patentamt / European Patent Office / Office européen des brevets

(11) **EP 3 755 626 B1**

(12) **FASCICULE DE BREVET EUROPEEN**

(45) Date de publication et mention de la délivrance du brevet:
**21.12.2022 Bulletin 2022/51**

(21) Numéro de dépôt: **19710063.9**

(22) Date de dépôt: **19.02.2019**

(51) Classification Internationale des Brevets (IPC):
**B64D 33/02** *(2006.01)* **F02C 7/045** *(2006.01)*
**F02K 1/82** *(2006.01)*

(52) Classification Coopérative des Brevets (CPC):
**F02K 1/827; B64D 29/00; F02C 7/045;**
B64D 2033/0206; F05D 2220/326; F05D 2220/327;
F05D 2260/963; Y02T 50/60

(86) Numéro de dépôt international:
**PCT/FR2019/050366**

(87) Numéro de publication internationale:
**WO 2019/158884 (22.08.2019 Gazette 2019/34)**

(54) **NACELLE DE TURBOMACHINE À PAROIS ACOUSTIQUEMENT POREUSES**

TURBOMASCHINENGONDEL MIT AKUSTISCH PORÖSEN WÄNDEN

TURBOMACHINE NACELLE HAVING ACOUSTICALLY POROUS WALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2018 FR 1851400**

(43) Date de publication de la demande:
**30.12.2020 Bulletin 2020/53**

(73) Titulaire: **SAFRAN AIRCRAFT ENGINES**
**75015 Paris (FR)**

(72) Inventeurs:
• **JODET, Norman, Bruno, André**
**77550 MOISSY-CRAMAYEL (FR)**
• **GONZALEZ, Jérémy, Paul, Francisco**
**77550 MOISSY-CRAMAYEL (FR)**

(74) Mandataire: **Regimbeau**
**20, rue de Chazelles**
**75847 Paris Cedex 17 (FR)**

(56) Documents cités:
EP-A2- 1 849 987    FR-A1- 2 261 583
FR-A1- 2 905 734    FR-A1- 2 965 859

**Description**

**DOMAINE TECHNIQUE DE L'INVENTION ET ETAT DE LA TECHNIQUE**

L'invention appartient au domaine des ensembles propulsifs pour aéronef, en particulier à celui des nacelles de turbomachine d'aéronef.

Un axe de développement important des ensembles propulsifs pour aéronef est la réduction du bruit moteur, que l'on peut définir comme le bruit généré par les éléments aérodynamiques d'un turboréacteur lors de son fonctionnement. Notamment, les parties solides tournantes du turboréacteur, comme les rotors de compresseurs, les rotors de turbines et la soufflante, produisent des signaux de fluctuation de pression qui créent des ondes acoustiques. Des solutions sont recherchées pour atténuer le bruit moteur ressenti notamment par les passagers à l'intérieur de la cabine, et par les personnes situées au sol sous le passage de l'aéronef. On recherche une solution d'atténuation de bruit qui soit d'impact limité sur l'encombrement mécanique, la masse, la consommation énergétique et le rendement de l'ensemble propulsif. Une solution bien connue pour la réduction du bruit moteur consiste à atténuer les ondes acoustiques à l'intérieur de la nacelle. Il est courant d'installer sur la paroi interne de la nacelle d'un turboréacteur des panneaux anti-bruit « en nid d'abeille », constitués de tôles métalliques rigides, perforées selon un motif régulier. Cependant, l'efficacité d'un tel traitement n'est optimisée que pour une gamme de fréquences relativement réduite et ne correspond donc pas à toutes les sources possibles de bruit moteur. Par ailleurs, ces panneaux en nid d'abeille génèrent un encombrement supplémentaire au sein de l'espace intérieur de la nacelle.

Il a également été proposé d'exploiter les phénomènes d'interférences acoustiques destructives à l'intérieur de la nacelle, pour que les ondes acoustiques à l'origine du bruit moteur se compensent entre elles. La demande de brevet FR 2 998 267 au nom de la Demanderesse décrit une technologie dérivée du concept déjà connu de « tube HQ » (pour tube de Herschel-Quincke) qui est un tube creux courbé constituant une dérivation parallèle pour les flux d'air, dans un conduit dans lequel circule une onde acoustique tel que le conduit secondaire. Il est proposé, dans cette demande de brevet, d'installer un dispositif selon ce principe dans une conduite d'air d'un turboréacteur équipée d'un panneau en nid d'abeille sur sa surface, le tube HQ débouchant à ses deux extrémités sur l'intérieur de la conduite en traversant le panneau en nid d'abeille. Un signal acoustique de fluctuation de pression est ainsi prélevé dans le conduit et réinjecté en un autre point, avec un déphasage favorisant des interférences destructives entre ledit signal et le signal non déphasé auquel il est superposé.

La demande de brevet FR 2 968 048 au nom de la Demanderesse propose un dispositif de contrôle actif du bruit généré par l'interaction entre le sillage de la soufflante et les aubes directrices de sortie (également dites OGV pour « Outlet Guide Vanes »). Des actuateurs piézoélectriques de dimension réduite sont localisés sur les OGV, directement au niveau des surfaces aérodynamiques. Ces sources électrostatiques génèrent un signal sonore préférentiellement dipolaire pour être le plus similaire possible avec le bruit généré par les soufflantes, cette technologie se basant également sur le principe des interférences destructives. Toutefois, il peut être difficile d'atteindre le niveau de puissance du bruit de soufflante.

Le document FR 2 965 859 A1 illustre un autre dispositif connu.

**PRESENTATION GENERALE DE L'INVENTION**

Il existe un besoin d'atténuation du bruit moteur généré par les parties mobiles d'une turbomachine d'aéronef, et notamment du bruit perçu par les passagers en cabine, et par les personnes se trouvant au sol sous le passage de l'aéronef.

Il existe notamment un besoin pour une solution propre à limiter l'énergie acoustique rayonnée dans toutes les directions aux extrémités axiales de la nacelle sur son axe longitudinal, mais qui génère peu d'encombrement supplémentaire dans l'espace intérieur de la nacelle.

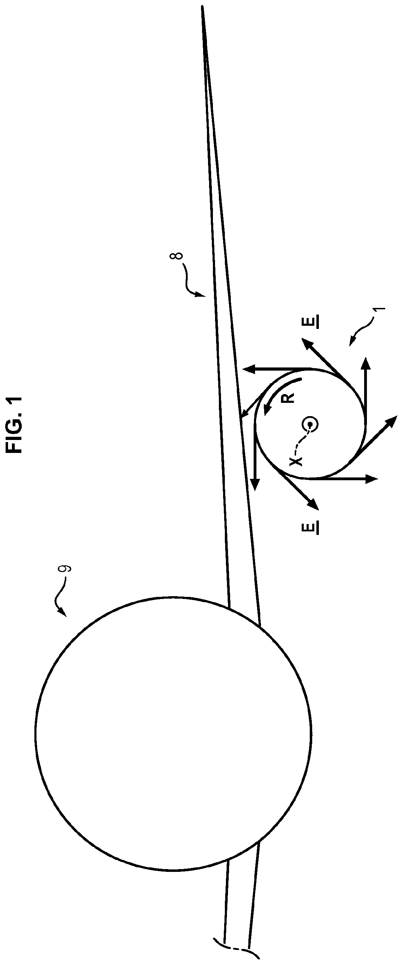

On a représenté de manière schématique sur la **Figure 1** annexée un aéronef vu de face. Cet aéronef comporte une aile gauche 8 au-dessous de laquelle est fixée une nacelle 1 de turbomachine, recouvrant une turbomachine en fonctionnement. La turbomachine et le pylône de fixation de la nacelle 1 à l'aile 8 ne sont pas représentées sur la figure. Les ondes acoustiques générées par les parties tournantes de la turbomachine, en particulier par les aubes de soufflante dont le sens de rotation est représenté par la flèche R sur la figure, se propagent dans le conduit secondaire formé entre la turbomachine et la nacelle. Les aubes de soufflante sont ici dans un sens de rotation descendant du côté du fuselage 9. Les flux d'intensité acoustique créés au sein du conduit secondaire sont associés à un rayonnement d'énergie acoustique E. Dans les nacelles de l'art antérieur telles que celle représentée en Figure 1, cette énergie acoustique est rayonnée principalement aux extrémités de la nacelle, selon des directions que l'on peut décrire en trois composantes :

- une composante axiale selon l'axe X de la nacelle, cette direction de propagation n'étant pas représentée,
- une composante radiale, non représentée,

- une composante azimutale.

Ces trois composantes correspondent aux trois dimensions d'un système de coordonnées cylindriques par rapport à l'axe longitudinal X, où la composante axiale selon l'axe X correspond à la cote dans les coordonnées cylindriques, la composante azimutale correspond au module, et la composante radiale correspond au rayon.

On a représenté sur la Figure 1 le sens de rotation de la soufflante de la turbomachine, et une pluralité de directions privilégiées de propagation de l'énergie acoustique E contenue dans les modes azimutaux (modes existants à l'intérieur du conduit secondaire) et d'évacuation de ladite énergie dans le milieu ambiant. La Demanderesse a constaté que seules certaines de ces directions privilégiées de propagation (représentées en trait plein) correspondent à une énergie qui participe au bruit moteur susceptible d'être perçu par les passagers en cabine et/ou par les personnes au sol. Les autres directions privilégiées de propagation (représentées en trait pointillé) ne contribuent pas au bruit moteur. Ainsi, il est proposé, plutôt que d'atténuer l'énergie acoustique au sein de la nacelle, de minimiser l'énergie acoustique rayonnée vers le sol et vers la cabine, en libérant cette énergie dans des directions de propagation non nuisibles au confort acoustique des personnes, parmi lesquelles les azimuts représentés en pointillés sur la Figure 1.

A ce titre, l'invention concerne selon un premier aspect une nacelle pour une turbomachine, la nacelle comprenant une paroi interne annulaire autour d'un axe longitudinal de la nacelle, la paroi interne annulaire étant destinée à entourer au moins en partie un capot primaire de la turbomachine, la paroi interne annulaire de la nacelle formant alors avec le capot primaire un conduit secondaire de la turbomachine, la paroi interne annulaire délimitant l'extérieur du conduit secondaire, la nacelle comprenant en outre une paroi externe annulaire entourant la paroi interne annulaire, la paroi externe annulaire étant configurée pour être en contact avec le milieu extérieur, la paroi interne annulaire comprenant une première partie acoustiquement poreuse, la paroi externe annulaire comprenant une deuxième partie acoustiquement poreuse, les deux parties acoustiquement poreuses étant en regard pour permettre la traversée de la paroi interne annulaire, puis de la paroi externe annulaire par des ondes acoustiques émises par la turbomachine reçue dans la nacelle, et leur évacuation à l'extérieur de la nacelle.

Dans une nacelle selon l'invention, l'énergie acoustique propagée au sein du conduit secondaire, du fait du déplacement de fluide par les parties tournantes, est partiellement libérée non pas au niveau des extrémités axiales de la nacelle, mais à travers les parties acoustiquement poreuses pratiquées dans les parois de la nacelle.

Un avantage de cette solution est de permettre de libérer l'énergie acoustique à l'extérieur selon des directions de propagation préférentielles. On peut choisir judicieusement le positionnement des parties acoustiquement poreuses pour que l'énergie acoustique ne soit pas libérée vers des espaces où se trouvent des personnes, l'énergie acoustique libérée ne participant alors pas au bruit moteur.

Un autre avantage de cette solution est qu'elle ne génère pas d'encombrement.

Des caractéristiques additionnelles et non-limitatives d'une nacelle de l'invention sont les suivantes, prises seules ou en l'une quelconque de leurs combinaisons techniquement possibles :

- les deux parties acoustiquement poreuses présentent une forme de portion de tube s'étendant entre une première position axiale et une deuxième position axiale le long de l'axe longitudinal de la nacelle, et s'étendant entre une première position azimutale et une deuxième position azimutale autour dudit axe longitudinal ;
- au moins une partie acoustiquement poreuse comprend des micro-perforations traversantes, réparties régulièrement au sein de ladite partie, lesdites micro-perforations pouvant être des trous de dimensions inférieures à 5 millimètres, de préférence espacés de moins de 10 millimètres ;
- au moins l'une des parois annulaires de la nacelle est recouverte, au niveau d'une partie acoustiquement poreuse, d'une couche perméable pour les ondes acoustiques, de préférence une toile métallique tissée.

La nacelle présentant une telle couche perméable additionnelle au niveau de parties acoustiquement poreuses présente un avantage additionnel, en ce que l'écoulement aérodynamique n'est pas perturbé au voisinage des parties poreuses, ce qui améliore les performances aérodynamiques de l'ensemble propulsif.

Selon un deuxième aspect, l'invention concerne un ensemble comprenant une nacelle telle que définie ci-avant et une turbomachine partiellement ou totalement comprise à l'intérieur de la nacelle.

L'invention vise selon un autre aspect un aéronef comprenant une nacelle telle que définie ci-avant. La nacelle peut par exemple être située au-dessus ou au-dessous d'une aile de l'aéronef.

De manière avantageuse et non-limitative pour la portée de l'invention, ledit aéronef peut présenter les caractéristiques suivantes, prises seules ou en l'une quelconque de leurs combinaisons possibles :

- l'aéronef comprend une nacelle dans laquelle les première et deuxième positions azimutales qui délimitent les parties acoustiquement poreuses sont définies de sorte que les ondes acoustiques soient libérées dans une zone située entre un premier plan et un deuxième plan,

le premier plan étant parallèle à l'axe longitudinal de la nacelle et tangent au fuselage de l'aéronef et à la nacelle, le deuxième plan étant tangent à la nacelle et sensiblement horizontal ;

- la nacelle est prévue pour recevoir une turbomachine dont le sens de rotation des aubes de soufflante est descendant du côté du fuselage, les première et deuxième positions azimutales θ1 et θ2 étant définies par le système d'équations suivant :

$$\frac{D_F}{2} - \frac{D_M}{2} - X_M \cos \theta_1 - Y_M \sin \theta_1 = 0$$

$$(X_{SL} - X_M)\cos \theta_2 + (Y_{SL} - Y_M)\sin \theta_2 + \frac{D_M}{2} = 0$$

où $X_M$ et $Y_M$ correspondent respectivement à l'abscisse et l'ordonnée du centre de la nacelle dans un même repère tridimensionnel dont le centre est situé sur l'axe longitudinal du fuselage,
où $X_{SL}$ et $Y_{SL}$ correspondent respectivement à l'abscisse et l'ordonnée du point de certification acoustique Sideline dans ledit repère tridimensionnel, et où $D_F$ et $D_M$ sont des diamètres maximaux respectifs des surfaces externes du fuselage et du moteur ;

- la nacelle est prévue pour recevoir une turbomachine dont le sens de rotation des aubes de soufflante est ascendant du côté du fuselage, les première et deuxième positions azimutales θ1 et θ2 étant définies par le système d'équations suivant :

$$-\frac{D_F}{2} - \frac{D_M}{2} + X_M \cos \psi_1 + Y_M \sin \psi_1 = 0$$

$$\theta_1 = \psi_1 + 180°$$

$$(X_{SL} - X_M)\cos \psi_2 + (Y_{SL} - Y_M)\sin \psi_2 - \frac{D_M}{2} = 0$$

$$\theta_2 = \psi_2 + 180°$$

où $X_M$ et $Y_M$ correspondent respectivement à l'abscisse et l'ordonnée du centre de la nacelle dans un même repère tridimensionnel dont le centre est situé sur l'axe longitudinal du fuselage,
où $X_{SL}$ et $Y_{SL}$ correspondent respectivement à l'abscisse et l'ordonnée du point de certification acoustique Sideline dans ledit repère tridimensionnel, et où $D_F$ et $D_M$ sont des diamètres maximaux respectifs des surfaces externes du fuselage et du moteur ;

- la première position axiale est située au niveau de la lèvre de la nacelle, et la deuxième position axiale est située à l'aplomb du bord d'attaque de l'aile ;
- la première position axiale est située à l'aplomb du bord de fuite de l'aile, et la deuxième position axiale est située à l'extrémité aval de la nacelle.

## PRESENTATION GENERALE DES FIGURES

D'autres caractéristiques, buts et avantages de l'invention ressortiront de la description qui suit, qui est purement illustrative et non limitative, accompagnée de la Figure 1 déjà décrite ci-avant et des autres dessins annexés suivants parmi lesquels :

La **Figure 2** représente une partie de nacelle de turbomachine fixée à une aile d'aéronef et vue en coupe longitudinale ;

La **Figure 3** représente schématiquement l'intérieur d'une nacelle selon un mode de réalisation de l'invention ;

La **Figure 4** représente un aéronef vu de face équipé d'une nacelle de l'invention selon un positionnement possible ;

La **Figure 5** représente un aéronef vu de face équipé d'une nacelle de l'invention selon un autre positionnement possible ;

La **Figure 6** représente un aéronef vu de face équipé d'une nacelle de l'invention selon un troisième positionnement possible.

## DESCRIPTION DETAILLEE DE MODES DE REALISATION

Dans tout ce qui suit, des éléments semblables sur les figures seront désignés par les mêmes références numériques. Par ailleurs, on décrira dans la suite une turbomachine de type turboréacteur à double flux, mais l'invention pourrait s'appliquer avec les mêmes avantages à d'autres types d'ensemble propulsif.

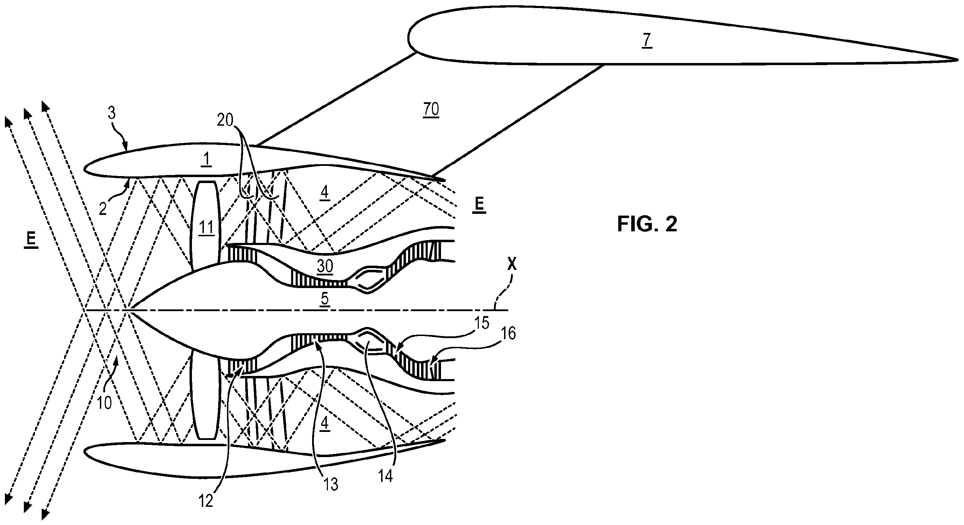

On a représenté en **Figure 2** une nacelle 1 contenant un turboréacteur à double flux, vu en coupe longitudinale selon l'axe longitudinal X du turboréacteur. La nacelle 1 ne comprend pas les parties acoustiquement poreuses qui seront décrites ci-après en relation aux figures suivantes. La nacelle 1 comprend une paroi interne annulaire 2 et une paroi externe annulaire 3. Les deux dites parois sont centrées sur l'axe longitudinal X de la turbomachine qui est également un axe longitudinal de la nacelle.

La paroi interne annulaire 2 recouvre partiellement le turboréacteur, et forme avec le capot primaire 30 un conduit secondaire 4 permettant le passage du flux secondaire lorsque le turboréacteur est en fonctionnement. Des ondes acoustiques peuvent se propager au sein de ce conduit secondaire, engendrées par les fluctuations de pression du milieu et notamment par le déplacement de fluide entraîné par les éléments tournants. L'ensemble propulsif comprend en outre, d'amont en aval, les éléments suivants : une entrée d'air 10, une soufflante 11, et à l'intérieur du capot primaire 30 qui délimite un conduit primaire : un compresseur basse pression 12, un compresseur haute pression 13, une chambre de combustion 14, une turbine haute pression 15, une turbine basse pression 16. Par ailleurs, le turboréacteur 3 comprend également d'autres éléments en aval de la turbine basse pression qui ne sont pas représentés sur la Figure 2, notamment une tuyère guidant la sortie d'air. La paroi interne annulaire 2 de la nacelle est reliée au capot primaire 30 par des bras de liaison 20, s'étendant radialement par rapport à l'axe X à partir du capot primaire 30.

La nacelle 1 est ici représentée fixée à une aile 7 d'aéronef qui s'étend parallèlement à l'axe longitudinal X du turboréacteur. La fixation de la nacelle à l'aile se fait par l'intermédiaire d'un pylône 70, par lequel passe le plan de coupe.

On a représenté sur la Figure 2 plusieurs trajets de propagation de l'énergie acoustique E au sein du conduit secondaire de la nacelle. Lorsque l'énergie acoustique E est rayonnée vers les extrémités de la nacelle 1, cette énergie est (en l'absence d'autre obstacle) susceptible de se propager hors de la nacelle selon toute direction radiale et azimutale. Notamment, comme il est visible en Figure 2, cette énergie peut être propagée jusqu'au sol, ou être propagée dans une direction perpendiculaire au plan de coupe de la Figure 2 et parvenir jusqu'à la cabine de l'aéronef.

Dans ces deux derniers cas, l'énergie acoustique E est source de bruit moteur, même si elle peut être partiellement absorbée avant d'être perçue par les individus.

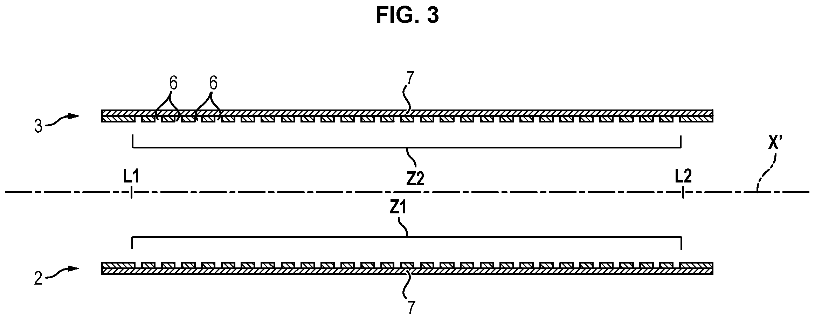

On a représenté en **Figure 3** une vue schématique en coupe longitudinale de l'intérieur d'une nacelle comprenant des parties acoustiquement poreuses sur sa paroi interne annulaire 2 et sur sa paroi externe annulaire 3, selon un mode de réalisation possible. L'axe X longitudinal central de la nacelle, le long duquel s'étend une turbomachine lorsqu'elle est logée dans la nacelle, n'est pas représenté sur la Figure 3 et serait situé au bas de cette figure. On a représenté un axe X' parallèle audit axe X.

La paroi interne annulaire 2 comprend une première partie acoustiquement poreuse Z1 qui s'étend entre une position axiale L1 et une position axiale L2. Par « partie acoustiquement poreuse », on entend que la partie Z1 présente une structure qui permet à des ondes acoustiques de passer à travers la paroi 2 au niveau de la partie Z1. En d'autres termes, l'intérieur de la nacelle (délimité par les parois 2 et 3) et la zone située au bas de la paroi 2 sont en communication acoustique.

En outre, dans cet exemple, la partie Z1 acoustiquement poreuse présente également une certaine largeur selon la direction azimutale - cette largeur n'étant pas visible sur la Figure 3. La partie Z1 s'étend autour de l'axe X central de la nacelle, le long de la paroi interne annulaire 2, entre un premier azimut θ1 et un deuxième azimut θ2. Autrement dit, la partie Z1 s'étend entre le plan passant par l'axe X d'azimut θ1 et le plan passant par l'axe X d'azimut θ2. La zone Z1 présente donc une forme de portion de tube, prise sur le tube formé par la paroi annulaire 2 s'étendant entre les positions axiales L1 et L2, la portion de tube étant prise entre les azimuts θ1 et θ2.

Par ailleurs, la paroi externe annulaire 3 présente une deuxième partie acoustiquement poreuse Z2. Cette partie Z2 met en communication acoustique l'intérieur de la nacelle et le milieu extérieur à la nacelle.

De manière importante, les parties acoustiquement poreuses Z1 et Z2 sont positionnées en regard l'une par rapport à l'autre, de sorte à permettre le passage d'une onde acoustique de l'espace à l'intérieur de la paroi interne annulaire 2, propre à recevoir une turbomachine, vers le milieu extérieur à la nacelle. Pour permettre ce passage d'onde acoustique, les parties Z1 et Z2 sont au moins partiellement alignées. Par alignement, on entend qu'une onde se propageant selon une direction radiale par rapport à l'axe longitudinal X de la nacelle peut passer par la partie Z1 de la paroi interne annulaire 2, puis par la partie Z2 de la paroi externe annulaire 3.

Dans l'exemple représenté en Figure 3, et de manière avantageuse, les parties acoustiquement poreuses Z1 et Z2 s'étendent sur les mêmes positions axiales (entre L1 et L2) et sur les mêmes positions azimutales (entre θ1 et θ2, ces positions azimutales n'étant pas représentées ici). Elles sont donc totalement alignées radialement.

Pour la réalisation des parties acoustiquement poreuses Z1 et Z2, dans l'exemple de la Figure 3, les parois 2 et 3 qui délimitent la nacelle présentent des micro-perforations traversantes 6 au niveau des parties Z1 et Z2. Dans cet exemple, les micro-perforations sont régulièrement réparties sur toute la surface des parties Z1 et Z2. Ces micro-perforations donnent aux parois 2 et 3 leur caractère acoustiquement poreux au niveau des parties Z1 et Z2. Les micro-perforations 6 sont ici des trous de dimensions inférieures à 5 millimètres, par exemple des trous circulaires de diamètre compris entre 1 et 5 millimètres. Les trous 6 sont ici espacés deux à deux de moins de 10 millimètres. Cependant, d'autres formes de perforations, et d'autres types de structure rendant les parois 2 et 3 localement acoustiquement poreuses, pourraient être envisagés. L'existence de parties perforées le long des écoulements de fluide dans l'ensemble propulsif formé par la nacelle et une turbomachine - notamment pour la paroi interne annulaire 2 qui délimite, lorsqu'une turbomachine est reçue au sein de la nacelle, le conduit secondaire - peut perturber l'aérodynamisme de ces écoulements de fluide. Il est important de minimiser ces perturbations, en vue de conserver un bon rendement aérodynamique de l'ensemble propulsif.

De manière avantageuse, les parties perforées Z1 et Z2 sont donc recouvertes par une couche supplémentaire 7, comme représenté en Figure 3. Un effet de la couche 7 est de minimiser les perturbations aérodynamiques au voisinage des parties Z1 et Z2, pour minimiser par exemple la perte d'air au niveau du flux secondaire.

La couche 7 est formée d'un matériau présentant une porosité importante aux ondes acoustiques. Par exemple, la couche 7 est formée de toile métallique tissée en treillis, ou « wire mesh » selon la terminologie anglosaxonne couramment utilisée. La toile métallique tissée est formée d'un maillage de fils métalliques. L'espacement entre les fils métalliques du maillage est choisi de sorte à faire apparaître des perforations des parties poreuses sous-jacentes.

De façon générale, plus l'espacement entre les fils métalliques est faible et plus un écoulement fluide traversant la couche 7 subit des pertes de charge, du fait des efforts de frottement du fluide sur les fils métalliques de la couche 7. En outre, plus l'épaisseur (selon une direction orthogonale à l'axe longitudinal de la nacelle) de la couche 7 est importante, plus un écoulement fluide traversant la couche 7 subit des pertes de charge. Plus les pertes de charge sont importantes à la traversée de la couche 7 et plus le débit de fluide traversant la couche 7 est faible. Avec des pertes de charge suffisantes, il est possible d'atteindre un débit traversant nul. Le caractère traversant de l'écoulement fluide par rapport à la couche 7 dépend également de l'orientation du vecteur vitesse de l'écoulement fluide, à l'interface entre la couche 7 et l'écoulement fluide. Plus la composante normale à la couche 7 de ce vecteur vitesse est de norme élevée, et plus l'écoulement fluide a tendance à traverser la couche 7. Un avantage d'obtenir un débit traversant réduit ou nul au niveau de la couche 7 - notamment en modulant l'espacement des fils constitutifs du treillis et l'épaisseur totale de la couche - est d'imperméabiliser les parties perforées de la nacelle vis-à-vis de l'écoulement aérodynamique, tout en conservant la perméabilité aux ondes acoustiques pour lesdites parties perforées.

En alternative, une couche 7 peut n'être réalisée que sur l'une des deux parties perforées Z1 ou Z2 des parois de nacelle, et peut n'être réalisée que sur une portion de ladite partie.

La portion de nacelle comprenant les parties acoustiquement poreuses Z1 et Z2 s'étend ici sur des positions axiales (entre L1 et L2) où la paroi interne annulaire 2 et la paroi externe annulaire 3 sont sensiblement parallèles ; toutefois, on pourrait positionner les parties acoustiquement poreuses dans une portion de nacelle où la distance entre les parois 2 et 3 est variable. On peut positionner les parties acoustiquement poreuses dans une portion de nacelle qui comprend des éléments de l'ensemble propulsif entre les parois 2 et 3 ; dans ce dernier cas, il est avantageux de prévoir que ces éléments soient conçus pour laisser passer les ondes acoustiques. Par exemple, si une conduite est intercalée entre les parois 2 et 3, il est avantageux que cette conduite comprenne également des micro-perforations en regard des parties poreuses Z1 et Z2.

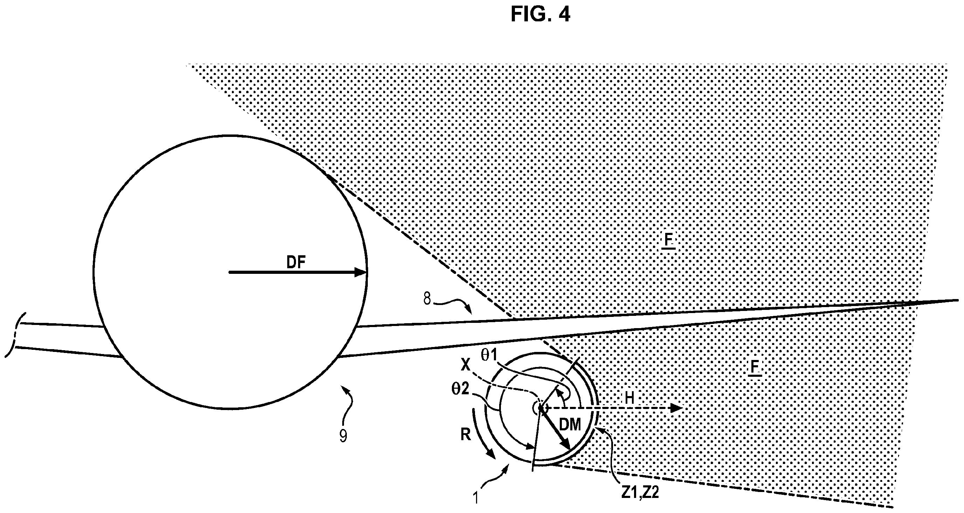

Les Figures 4, 5 et 6 représentent plusieurs modes de réalisation pour un aéronef avec un ensemble propulsif comportant une nacelle 1 à parois partiellement acoustiquement poreuses. Sur ces figures, l'aéronef est vu de face selon une direction parallèle à l'axe longitudinal de la nacelle et du fuselage. Dans ces modes de réalisation, ladite nacelle est fixée en-dessous de l'aile gauche, ou au-dessus de l'aile gauche.

Dans tous ces modes de réalisation, la nacelle 1 présente au niveau de sa paroi interne annulaire une première partie acoustiquement poreuse Z1 en forme de portion de tube, s'étendant entre une première position axiale L1 selon l'axe longitudinal X de la nacelle et une deuxième position axiale L2, et s'étendant sur tout le périmètre de la nacelle sauf entre une première position azimutale θ1 et une deuxième position azimutale θ2. La nacelle présente également, au niveau de sa paroi externe annulaire qui entoure la paroi interne annulaire, une deuxième partie acoustiquement poreuse Z2 en forme de portion de tube, s'étendant entre les mêmes positions axiales L1 et L2, et s'étendant sur tout le périmètre de la nacelle sauf entre les mêmes positions azimutales θ1 et θ2. Pour la réalisation des deux parties acoustiquement poreuses, la nacelle peut par exemple présenter des micro-perforations régulièrement réparties tel que décrit ci-avant en relation à la Figure 3. Dans n'importe lequel des modes de réalisation décrits ci-après, l'une des deux parties acoustiquement poreuses Z1 et Z2, ou les deux dites parties poreuses, sont préférentiellement recouvertes d'une couche 7 de toile métallique tissée telle que définie ci-avant. Les deux parois interne et externe de la nacelle n'ont pas été représentées séparément sur les Figures 4, 5 et 6 ; on a représenté une seule paroi annulaire de nacelle, les parties acoustiquement poreuses Z1 et Z2 étant représentées par un même arc de cercle en trait épais.

La **Figure 4** se rapporte à un premier mode de réalisation où la nacelle 1 est positionnée sous la surface basse de l'aile gauche 8, et où la soufflante de la turbomachine (non représentée ici) reçue dans la nacelle présente dans les phases de régime de croisière un sens de rotation selon la flèche R. Les aubes de soufflante sont descendantes du côté du fuselage 9. Par fuselage, on entend le corps principal de l'aéronef qui comprend notamment un cône de nez, un caisson central avec la cabine destinée à recevoir des passagers, et un cône de queue.

Le positionnement azimutal (positions $\theta1$ et $\theta2$, repérées par rapport à un axe horizontal H parallèle au sol) des parties acoustiquement poreuses Z1 et Z2 de la nacelle 1 est calculé en fonction notamment du positionnement de la nacelle 1 par rapport au fuselage 9, et en fonction de la position de certification acoustique Sideline. La position Sideline concerne la propagation du bruit moteur vers les personnes présentes au sol. Ladite position est fixée par la réglementation afférente au transport aérien international, notamment par l'OACI (Organisation de l'Aviation Civile Internationale) ; plus cette position Sideline est éloignée sur les côtés de l'aéronef, et plus on cherche à limiter le rayonnement d'énergie acoustique vers le sol.

D'une manière générale, les positions azimutales $\theta1$ et $\theta2$ sont définies de sorte que les ondes acoustiques soient libérées dans une zone préférentielle F, où il est considéré que l'énergie acoustique libérée est peu nuisible et ne participe pas au bruit moteur perçu par les passagers ou par les personnes au sol.

La zone F est située entre un premier plan et un deuxième plan, le premier plan étant parallèle à l'axe longitudinal X de la nacelle 1 et tangent au fuselage 9 de l'aéronef et à la nacelle 1, le deuxième plan étant tangent à la partie basse de la nacelle 1 et étant sensiblement horizontal. L'horizontale est repérée par rapport au sol lorsque l'aéronef est posé au sol.

Dans le mode de réalisation représenté en Figure 4, où les aubes de soufflantes tournent dans un sens descendant du côté du fuselage 9, les positions azimutales $\theta1$ et $\theta2$ sont définies par le système d'équations suivant :

$$\frac{D_F}{2} - \frac{D_M}{2} - X_M \cos\theta_1 - Y_M \sin\theta_1 = 0$$

$$(X_{SL} - X_M)\cos\theta_2 + (Y_{SL} - Y_M)\sin\theta_2 + \frac{D_M}{2} = 0$$

où $X_M$ et $Y_M$ correspondent respectivement à l'abscisse et l'ordonnée du centre de la nacelle 1 (ce centre étant situé sur l'axe longitudinal X), dans un repère tridimensionnel dont le centre est situé sur l'axe du fuselage, où $X_{SL}$ et $Y_{SL}$ correspondent respectivement à l'abscisse et l'ordonnée du point de certification acoustique Sideline dans ledit repère tridimensionnel, et où $D_F$ et $D_M$ sont des diamètres maximaux respectifs des surfaces externes du fuselage et de la nacelle, ici les diamètres maximaux respectivement pour les projections du fuselage 9 et de la nacelle 1 selon une direction parallèle à l'axe X.

Des exemples de coordonnées de point de position Sideline, tel que défini ci-avant, dans ledit repère tridimensionnel sont les suivants : une abscisse $X_{SL}$ de 450,0 m (distance latérale réglementaire entre ledit point et l'aéronef), une ordonnée $Y_{SL}$ de 304,8 m (valeur proche de 1000 pieds, altitude de l'aéronef très proche de l'altitude correspondant à un maximum de bruit avion mesuré au point Sideline).

Par ailleurs, dans ce mode de réalisation, l'angle $\theta1$ (repéré à partir de l'axe horizontal H) peut valoir par exemple 45 degrés, et l'angle $\theta2$ peut valoir 260 degrés.

Avec le sens choisi sur les Figures 4, 5 et 6, les parties acoustiquement poreuses Z1 et Z2 s'étendent à partir de l'azimut $\theta2$ jusqu'à l'azimut $\theta1$, autrement dit, sur tout le périmètre de la nacelle sauf sur la portion à partir de l'azimut $\theta1$ jusqu'à l'azimut $\theta2$.

La frontière des parties poreuses Z1 et Z2 à l'azimut $\theta1$ permet de limiter le rayonnement d'énergie acoustique vers la cabine ; à la frontière $\theta1$, la direction de propagation parfaitement azimutale est tangente à la partie haute du fuselage 9, et ne croise pas l'intérieur du fuselage.

La frontière des parties poreuses Z1 et Z2 à l'azimut $\theta2$ permet de n'autoriser la propagation des ondes acoustiques sortant de la partie basse de la nacelle que dans des directions proches de l'horizontale ; ainsi, ces ondes acoustiques ne parviennent pas jusqu'à la partie du sol située sous l'aéronef. Ces ondes acoustiques parcourent un long chemin selon leur direction de propagation avant de parvenir au sol, et sont donc en très grande partie atténuées par l'atmosphère avant d'atteindre le sol. Ces ondes ne contribuent que très peu au bruit avion.

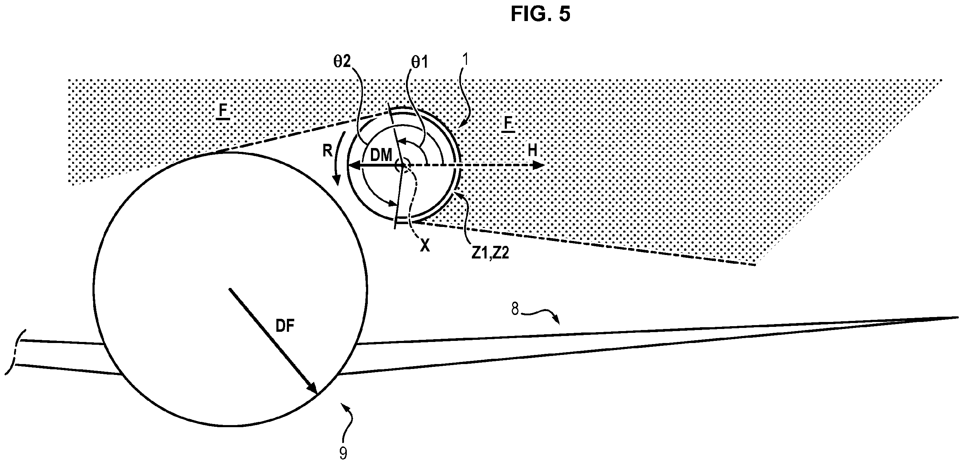

La **Figure 5** se rapporte à un deuxième mode de réalisation, où la nacelle 1 est positionnée au-dessus de la surface haute de l'aile gauche 8.

De même que dans le mode de réalisation de la Figure 4, la soufflante reçue dans la nacelle présente dans les phases de régime de croisière un sens de rotation selon la flèche R, les aubes de soufflante étant descendantes du côté du fuselage 9.

Ici, les positions azimutales θ1 et θ2 sont déterminées par la résolution du système d'équations suivant, qui est le même que pour le mode de réalisation illustré en Figure 4 :

$$\frac{D_F}{2} - \frac{D_M}{2} - X_M\cos\theta_1 - Y_M\sin\theta_1 = 0$$

$$(X_{SL} - X_M)\cos\theta_2 + (Y_{SL} - Y_M)\sin\theta_2 + \frac{D_M}{2} = 0$$

Les positions azimutales θ1 et θ2 s'interprètent de la même manière que précédemment ; la zone F préférentielle de propagation des ondes acoustiques sortant de la nacelle 1 ne comprend ni la cabine de l'aéronef, ni une zone du sol où lesdites ondes sont susceptibles de contribuer de manière importante au bruit avion.

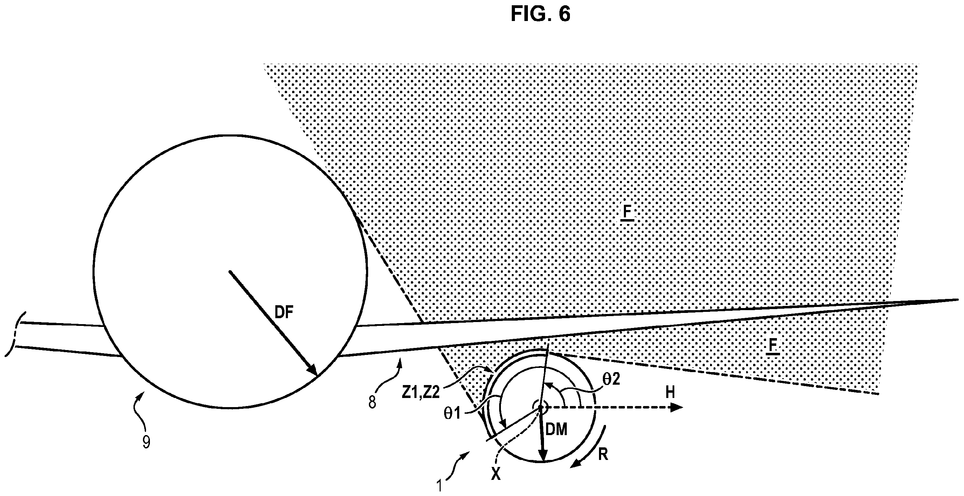

La **Figure 6** illustre un troisième mode de réalisation, où la nacelle 1 est positionnée au-dessous de la surface basse de l'aile gauche 8.

A l'inverse des modes de réalisation décrits précédemment, la soufflante reçue dans la nacelle présente dans les phases de régime de croisière un sens de rotation selon la flèche R avec des aubes de soufflante étant descendantes du côté opposé au fuselage 9.

Avec ce sens de rotation de la soufflante, les plans qui limitent la zone F de propagation des ondes acoustiques à travers les parties poreuses Z1 et Z2 sont définis de manière différente. Les première et deuxième positions azimutales θ1 et θ2 sont définies par le système d'équations suivant :

$$-\frac{D_F}{2} - \frac{D_M}{2} + X_M\cos\psi_1 + Y_M\sin\psi_1 = 0$$

$$\theta_1 = \psi_1 + 180°$$

$$(X_{SL} - X_M)\cos\psi_2 + (Y_{SL} - Y_M)\sin\psi_2 - \frac{D_M}{2} = 0$$

$$\theta_2 = \psi_2 + 180°$$

Les valeurs $X_M$, $Y_M$, $X_{SL}$, $Y_{SL}$, $D_M$ et $D_F$ sont définies de la même manière que précédemment.

Dans ce mode de réalisation, les parties acoustiquement poreuses Z1 et Z2 des parois de nacelle sont situées sur une partie haute de la nacelle ; en effet, le sens de rotation de la soufflante (ascendant du côté du fuselage) favorise une propagation à l'opposé du fuselage pour les ondes acoustiques sortant de la nacelle et passant à travers les parties poreuses Z1 et Z2.

A titre d'exemple, dans ce mode de réalisation, l'angle θ1 peut valoir 170 degrés et l'angle θ2 peut valoir 80 degrés.

Pour ce qui concerne le positionnement axial des parties poreuses de parois de nacelle (limitées en amont par la position L1 et en aval par la position L2), ce positionnement axial est avantageusement réalisé en fonction de la position de la nacelle 1 par rapport à l'aile 8.

Selon un mode préférentiel, pouvant être réalisé en combinaison avec l'un quelconque des modes de réalisation des Figures 4, 5 et 6, si la nacelle est positionnée en amont de l'aile (la lèvre de la nacelle dépassant du bord d'attaque de l'aile) la position L1 correspond à la lèvre de la nacelle et la position L2 correspond au projeté vertical sur la nacelle du bord d'attaque de l'aile ; si la nacelle est positionnée en aval de l'aile (l'extrémité aval de nacelle dépassant du bord de fuite de l'aile), la position L1 correspond au projeté vertical sur la nacelle dudit bord de fuite, et la position L2 correspond à l'extrémité aval de la nacelle.

Ces positions axiales sont avantageuses, en ce qu'elles empêchent que des ondes acoustiques passant à travers les parties poreuses Z1 et Z2 ne soient réfléchies par les surfaces basse ou haute de l'aile, auquel cas leurs directions de propagation ne sont plus maîtrisées. Si la nacelle n'est pas voisine d'un élément acoustiquement réfléchissant de l'aéronef tel que l'aile, une plus large gamme de positions axiale peut être envisagée.

Il est à noter que les paramétrages décrits ci-avant ne sont pas limitatifs, et ne constituent que des modes de réalisation possibles. D'autres paramétrages pour le positionnement des parties acoustiquement poreuses des parois de nacelle pourraient être envisagés.

Par ailleurs, la nacelle pourrait présenter plusieurs parties poreuses distinctes le long du périmètre de la nacelle, de façon à minimiser les réflexions non souhaitées et de façon à influer de manière plus précise sur les directions de propagation des ondes acoustiques sortant de la nacelle.

## Revendications

1. Nacelle (1) pour une turbomachine, la nacelle comprenant une paroi interne annulaire (2) autour d'un axe longitudinal (X) de la nacelle, la paroi interne annulaire (2) étant destinée à entourer au moins en partie un capot primaire (30) de la turbomachine, la paroi interne annulaire (2) de la nacelle formant alors avec le capot primaire (30) un conduit secondaire de la turbomachine, la paroi interne annulaire (2) délimitant l'extérieur du conduit secondaire, la nacelle comprenant en outre une paroi externe annulaire (3) entourant la paroi interne annulaire (2), la paroi externe annulaire (3) étant configurée pour être en contact avec le milieu extérieur, la paroi interne annulaire (2) comprenant une première partie acoustiquement poreuse (Z1),

   la nacelle étant **caractérisée en ce que** paroi externe annulaire (3) comprend une deuxième partie acoustiquement poreuse (Z2),
   les deux parties acoustiquement poreuses étant en regard pour permettre la traversée de la paroi interne annulaire (2), puis de la paroi externe annulaire (3) par des ondes acoustiques émises par la turbomachine reçue dans la nacelle, et leur évacuation à l'extérieur de la nacelle.

2. Nacelle selon la revendication 1, dans laquelle les deux parties acoustiquement poreuses (Z1, Z2) présentent une forme d'arc de tube s'étendant entre une même première position axiale (L1) et une même deuxième position axiale (L2) le long de l'axe longitudinal (X) de la nacelle, et s'étendant entre une même première position azimutale ($\theta$1) et une même deuxième position azimutale ($\theta$2) autour dudit axe longitudinal.

3. Nacelle selon l'une des revendications 1 ou 2, dans laquelle au moins une partie acoustiquement poreuse comprend des micro-perforations (6) traversantes, réparties régulièrement au sein de ladite partie.

4. Nacelle selon la revendication 3, dans laquelle les micro-perforations sont des trous de dimensions inférieures à 5 millimètres, de préférence espacés de moins de 10 millimètres.

5. Nacelle selon l'une des revendications 1 à 4, dans laquelle au moins l'une des parois annulaires de la nacelle est recouverte, au niveau d'une partie acoustiquement poreuse, d'une couche perméable (7) pour les ondes acoustiques, de préférence une toile métallique tissée.

6. Ensemble comprenant une nacelle selon l'une des revendications 1 à 5 et une turbomachine à l'intérieur de la nacelle.

7. Aéronef comprenant une nacelle (1) pour une turbomachine selon l'une des revendications 1 à 5.

8. Aéronef selon la revendication 7, comprenant une nacelle selon la revendication 2 dans laquelle les première et deuxième positions azimutales ($\theta$1, $\theta$2) sont définies de sorte que les ondes acoustiques soient libérées dans une zone (F) située entre un premier plan et un deuxième plan,

   le premier plan étant parallèle à l'axe longitudinal de la nacelle et tangent au fuselage de l'aéronef et à la nacelle,
   le deuxième plan étant tangent à la nacelle et sensiblement horizontal.

9. Aéronef selon la revendication 8, dans lequel la nacelle est prévue pour recevoir une turbomachine dont le sens de rotation des aubes de soufflante est descendant du côté du fuselage,

les première et deuxième positions azimutales θ1 et θ2 étant définies par le système d'équations suivant :

$$\frac{D_F}{2} - \frac{D_M}{2} - X_M \cos \theta_1 - Y_M \sin \theta_1 = 0$$

$$(X_{SL} - X_M)\cos \theta_2 + (Y_{SL} - Y_M)\sin \theta_2 + \frac{D_M}{2} = 0$$

où $X_M$ et $Y_M$ correspondent respectivement à l'abscisse et l'ordonnée du centre de la nacelle dans un même repère tridimensionnel dont le centre est situé sur l'axe longitudinal du fuselage,
où $X_{SL}$ et $Y_{SL}$ correspondent respectivement à l'abscisse et l'ordonnée du point de certification acoustique Sideline dans ledit repère tridimensionnel,
et où $D_F$ et $D_M$ sont des diamètres maximaux respectifs de surfaces externes du fuselage et du moteur.

10. Aéronef selon la revendication 8, dans lequel la nacelle est prévue pour recevoir une turbomachine dont le sens de rotation des aubes de soufflante est ascendant du côté du fuselage,

les première et deuxième positions azimutales θ1 et θ2 étant définies par le système d'équations suivant :

$$-\frac{D_F}{2} - \frac{D_M}{2} + X_M \cos \psi_1 + Y_M \sin \psi_1 = 0$$

$$\theta_1 = \psi_1 + 180°$$

$$(X_{SL} - X_M)\cos \psi_2 + (Y_{SL} - Y_M)\sin \psi_2 - \frac{D_M}{2} = 0$$

$$\theta_2 = \psi_2 + 180°$$

où $X_M$ et $Y_M$ correspondent respectivement à l'abscisse et l'ordonnée du centre de la nacelle dans un même repère tridimensionnel dont le centre est situé sur l'axe longitudinal du fuselage,
où $X_{SL}$ et $Y_{SL}$ correspondent respectivement à l'abscisse et l'ordonnée du point de certification acoustique Sideline dans ledit repère tridimensionnel,
et où $D_F$ et $D_M$ sont des diamètres maximaux respectifs de surfaces externes du fuselage et du moteur.

11. Aéronef selon la revendication 7, comprenant une nacelle selon la revendication 2, dans laquelle la première position axiale (L1) est située au niveau de la lèvre de la nacelle, et la deuxième position axiale (L2) est située à l'aplomb du bord d'attaque de l'aile.

12. Aéronef selon la revendication 7, comprenant une nacelle selon la revendication 2, dans laquelle la première position axiale (L1) est située à l'aplomb du bord de fuite de l'aile, et la deuxième position axiale (L2) est située à l'extrémité aval de la nacelle.

**Patentansprüche**

1. Gondel (1) einer Turbomaschine, die eine ringförmige Innenwand (2) um eine Längsachse (X) der Gondel aufweist, wobei die ringförmige Innenwand (2) dazu bestimmt ist, zumindest teilweise eine Primärverkleidung (30) der Turbomaschine zu umgeben, so dass die ringförmige Innenwand (2) der Gondel mit der Primärverkleidung (30) einen Sekundärkanal der Turbomaschine bildet, wobei die ringförmige Innenwand (2) das Äußere des Sekundärkanals abgrenzt,

die Gondel ferner eine ringförmige Außenwand (3) umfasst, die die ringförmige Innenwand (2) umgibt, wobei die ringförmige Außenwand (3) so konfiguriert ist, dass sie in Kontakt mit der äußeren Umgebung der Gondel steht,

die ringförmige Innenwand (2) einen ersten akustisch porösen Teil (Z1) aufweist, wobei die Gondel (1) **dadurch gekennzeichnet ist, dass** die ringförmige Außenwand einen zweiten akustisch porösen Teil (Z2) aufweist, die beiden akustisch porösen Teile einander zugewandt sind, um den Durchgang der von der Turbomaschine ausgestrahlten und in der Gondel empfangenen Schallwellen durch die ringförmige Innenwand (2) und dann durch die ringförmige Außenwand (3) zu ermöglichen und sie außerhalb der Gondel abzuleiten.

2. Gondel nach Anspruch 1, wobei die beiden akustisch porösen Teile (Z1, Z2) die Form eines Rohrabschnitts haben, der sich zwischen der gleichen ersten axialen Position (L1) und der gleichen zweiten axialen Position (L2) entlang der Längsachse (X) der Gondel erstreckt und sich zwischen der gleichen ersten azimutalen Position ($\theta$1) und der gleichen zweiten azimutalen Position ($\theta$2) um die Längsachse erstreckt.

3. Gondel nach Anspruch 1, wobei mindestens eines der akustisch porösen Teile Mikro-Durchgangslöcher (6) aufweist, die gleichmäßig innerhalb des akustisch porösen Teils verteilt sind.

4. Gondel nach Anspruch 3, wobei es sich bei den Mikro-Durchgangslöchern um Löcher mit Abmessungen von weniger als 5 Millimetern, vorzugsweise in einem Abstand von weniger als 10 Millimetern, handelt.

5. Gondel nach Anspruch 1, wobei mindestens eine der ringförmigen Wände der Gondel an einem der akustisch porösen Teile mit einer für die akustischen Wellen durchlässigen Schicht (7), vorzugsweise einem Drahtgewebe, bedeckt ist.

6. Baugruppe mit einer Gondel nach Anspruch 1 und einer Turbomaschine im Inneren der Gondel.

7. Flugzeug mit einer Gondel (1) für eine Turbomaschine nach Anspruch 1.

8. Flugzeug nach Anspruch 7, mit einer Gondel nach Anspruch 2, wobei die erste und die zweite Azimutalposition ($\theta$1, $\theta$2) so definiert sind, dass die akustischen Wellen in einem Bereich (F) zwischen einer ersten Ebene und einer zweiten Ebene freigesetzt werden,

wobei die erste Ebene parallel zur Längsachse der Gondel verläuft und den Rumpf des Flugzeugs und die Gondel tangiert,
wobei die zweite Ebene die Gondel tangiert und im Wesentlichen horizontal verläuft.

9. Flugzeug nach Anspruch 8, wobei die Gondel zur Aufnahme einer Turbomaschine vorgesehen ist, deren Drehrichtung der Fanschaufeln auf der Seite des Rumpfes abwärts gerichtet ist,

wobei die erste und zweite azimutale Position $\theta$1 und $\theta$2 durch das folgende Gleichungssystem definiert sind:

$$\frac{D_F}{2} - \frac{D_M}{2} - X_M \cos\theta_1 - Y_M \sin\theta_1 = 0$$

$$(X_{SL} - X_M)\cos\theta_2 + (Y_{SL} - Y_M)\sin\theta_2 + \frac{D_M}{2} = 0$$

wobei $X_M$ und $Y_M$ der Abszisse bzw. der Ordinate des Mittelpunkts der Gondel in demselben dreidimensionalen Bezugssystem entsprechen, dessen Mittelpunkt sich auf der Längsachse des Rumpfes befindet,
wobei $X_{SL}$ und $Y_{SL}$ der Abszisse bzw. der Ordinate eines Nebengeräusch-Zertifizierungspunkts in dem dreidimensionalen Bezugssystem entsprechen,
und wobei $D_F$ und $D_M$ die jeweiligen maximalen Durchmesser der Außenflächen des Rumpfes und des Motors sind.

10. Flugzeug nach Anspruch 8, wobei die Gondel zur Aufnahme einer Turbomaschine vorgesehen ist, deren Drehrichtung der Fanschaufeln auf der Seite des Rumpfes aufsteigend ist,

wobei die erste und zweite azimutale Position θ1 und θ2 durch das folgende Gleichungssystem definiert sind:

$$-\frac{D_F}{2} - \frac{D_M}{2} + X_M \cos \psi_1 + Y_M \sin \psi_1 = 0$$

$$\theta_1 = \psi_1 + 180°$$

$$(X_{SL} - X_M)\cos \psi_2 + (Y_{SL} - Y_M)\sin \psi_2 - \frac{D_M}{2} = 0$$

$$\theta_2 = \psi_2 + 180°$$

wobei $X_M$ und $Y_M$ der Abszisse bzw. der Ordinate des Mittelpunkts der Gondel in demselben dreidimensionalen Bezugssystem entsprechen, dessen Mittelpunkt sich auf der Längsachse des Rumpfes befindet,
wobei $X_{SL}$ und $Y_{SL}$ der Abszisse bzw. der Ordinate eines Nebengeräusch-Zertifizierungspunkts in dem dreidimensionalen Bezugssystem entsprechen,
und wobei $D_F$ und $D_M$ die jeweiligen maximalen Durchmesser der Außenflächen des Rumpfes und des Motors sind.

11. Flugzeug nach Anspruch 7, umfassend eine Gondel nach Anspruch 2, wobei sich die erste axiale Position (L1) an einer Lippe der Gondel befindet und die zweite axiale Position (L2) auf eine Vorderkante eines Flügels ausgerichtet ist.

12. Flugzeug nach Anspruch 7, umfassend eine Gondel nach Anspruch 2, wobei die erste axiale Position (L1) mit einer Hinterkante eines Flügels ausgerichtet ist und die zweite axiale Position (L2) sich an einem stromabwärtigen Ende der Gondel befindet.

## Claims

1. A nacelle (1) for a turbomachine, the nacelle comprising an annular inner wall (2) about a longitudinal axis (X) of the nacelle, the annular inner wall (2) being intended to surround at least partly a primary cowl (30) of the turbomachine, such that the annular inner wall (2) of the nacelle forms with the primary cowl (30) a secondary duct of the turbomachine, the annular inner wall (2) delimiting the exterior of the secondary duct,

   the nacelle further comprising an annular outer wall (3) surrounding the annular inner wall (2), the annular outer wall (3) being configured to be in contact with the exterior environment of the nacelle,
   the annular inner wall (2) comprising a first acoustically porous part (Z1), the nacelle (1) being **characterized in that** the annular outer wall comprises a second acoustically porous part (Z2),
   the two acoustically porous parts facing each other to allow the passage through the annular inner wall (2), then through the annular outer wall (3) of acoustic waves emitted by the turbomachine received in the nacelle, and their discharge outside the nacelle.

2. The nacelle according to claim 1, wherein the two acoustically porous parts (Z1, Z2) have the shape of a tube portion extending between the same first axial position (L1) and the same second axial position (L2) along the longitudinal axis (X) of the nacelle, and extending between the same first azimuthal position (θ1) and the same second azimuthal position (θ2) about said longitudinal axis.

3. The nacelle according to claim 1, wherein at least one of the acoustically porous parts comprises micro through-holes (6), evenly distributed within said acoustically porous part.

4. The nacelle according to claim 3, wherein the micro through-holes are holes of dimensions smaller than 5 millimeters, preferably spaced by less than 10 millimeters.

5. The nacelle according to claim 1, wherein at least one of the annular walls of the nacelle is covered, at one of the acoustically porous parts, with a permeable layer (7) for the acoustic waves, preferably a woven wire mesh.

**6.** An assembly comprising a nacelle according to claim 1 and a turbomachine inside the nacelle.

**7.** An aircraft comprising a nacelle (1) for a turbomachine according to claim 1.

**8.** The aircraft according to claim 7, comprising a nacelle according to claim 2 wherein the first and second azimuthal positions ($\theta$1, $\theta$2) are defined so that the acoustic waves are released in an area (F) located between a first plane and a second plane,

the first plane being parallel to the longitudinal axis of the nacelle and tangent to the fuselage of the aircraft and to the nacelle,
the second plane being tangent to the nacelle and substantially horizontal.

**9.** The aircraft according to claim 8, wherein the nacelle is provided to receive a turbomachine which direction of rotation of the fan vanes is descending on the side of the fuselage,

the first and second azimuthal positions $\theta$1 and $\theta$2 being defined by the following system of equations:

$$\frac{D_F}{2} - \frac{D_M}{2} - X_M \cos\theta_1 - Y_M \sin\theta_1 = 0$$

$$(X_{SL} - X_M)\cos\theta_2 + (Y_{SL} - Y_M)\sin\theta_2 + \frac{D_M}{2} = 0$$

where $X_M$ and $Y_M$ correspond respectively to the abscissa and to the ordinate of the center of the nacelle in the same three-dimensional reference frame whose center is located on the longitudinal axis of the fuselage,
where $X_{SL}$ and $Y_{SL}$ correspond respectively to the abscissa and to the ordinate of a Sideline noise certification point in said three-dimensional reference frame,
and where $D_F$ and $D_M$ are respective maximum diameters of the outer surfaces of the fuselage and of the engine.

**10.** The aircraft according to claim 8, wherein the nacelle is provided to receive a turbomachine which direction of rotation of the fan vanes is ascending on the side of the fuselage,

the first and second azimuthal positions $\theta$1 and $\theta$2 being defined by the following system of equations:

$$-\frac{D_F}{2} - \frac{D_M}{2} + X_M \cos\psi_1 + Y_M \sin\psi_1 = 0$$

$$\theta_1 = \psi_1 + 180°$$

$$(X_{SL} - X_M)\cos\psi_2 + (Y_{SL} - Y_M)\sin\psi_2 - \frac{D_M}{2} = 0$$

$$\theta_2 = \psi_2 + 180°$$

where $X_M$ and $Y_M$ correspond respectively to the abscissa and to the ordinate of the center of the nacelle in the same three-dimensional reference frame whose center is located on the longitudinal axis of the fuselage,
where $X_{SL}$ and $Y_{SL}$ correspond respectively to the abscissa and to the ordinate of a Sideline noise certification point in said three-dimensional reference frame,
and where $D_F$ and $D_M$ are respective maximum diameters of outer surfaces of the fuselage and of the engine.

11. The aircraft according to claim 7, comprising a nacelle according to claim 2, wherein the first axial position (L1) is located at a lip of the nacelle, and the second axial position (L2) is aligned with a leading edge of a wing.

12. The aircraft according to claim 7, comprising a nacelle according to claim 2, wherein the first axial position (L1) is aligned with a trailing edge of a wing, and the second axial position (L2) is located at a downstream end of the nacelle.

FIG. 1

FIG. 2

**FIG. 3**

FIG. 4

EP 3 755 626 B1

**FIG. 5**

EP 3 755 626 B1

**FIG. 6**

**EP 3 755 626 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2998267
- FR 2968048
- FR 2965859 A1